# EUROPÄISCHE PATENTSCHRIFT

(11) **EP 1 144 314 B1**
(45) Veröffentlichungstag und Bekanntmachung des Hinweises auf die Patenterteilung: **07.05.2003**
(21) Anmeldenummer: 99965582.2
(22) Anmeldetag: 30.12.1999
(51) Int. Cl.: C02F 1/32

(54) **UV-BESTRAHLUNGSVORRICHTUNG, INSBESONDERE ZUR DESINFEKTION VON FLÜSSIGKEITEN MIT VERMINDERTER UV-TRANSMISSION**
UV RADIATION DEVICE, ESPECIALLY FOR DISINFECTING LIQUIDS WITH REDUCED UV TRANSMISSION
DISPOSITIF D'EXPOSITION AUX RAYONS ULTRAVIOLETS, NOTAMMENT POUR DESINFECTER DES LIQUIDES A TRANSMISSION D'ULTRAVIOLETS REDUITE

(30) Priorität: 30.12.1998 DE 19860530
(43) Veröffentlichungstag der Anmeldung: 17.10.2001
(73) Patentinhaber: Wedeco AG, 40472 Düsseldorf (DE)
(72) Erfinder: WEDEKAMP, Horst, D-32052 Herford (DE)
(74) Vertreter: Lenzing, Andreas, Dr.
(86) Internationale Anmeldenummer: EP9910476
(87) Internationale Veröffentlichungsnummer: WO00040511

(56) Entgegenhaltungen:
- EP-A- 0 809 936
- US-A- 4 367 410
- US-A- 4 757 205
- US-A- 5 368 826
- US-A- 5 418 370
- US-A- 5 660 719

## Beschreibung

Die Erfindung betrifft eine Vorrichtung zur UV-Bestrahlung, insbesondere zur Desinfektion, von strömenden Flüssigkeiten mit verminderter UV-Transmission. Die Vorrichtung besitzt einen oder mehrere Halterahmen mit einer Vielzahl von UV-Modulen, die jeweils einen Quecksilber-Niederdruckstrahler enthalten. Die UV-Module sind durch die Halterahmen im wesentlichen parallel im Abstand voneinander gehalten und erstrecken sich in Strömungsrichtung der strömenden Flüssigkeit, bei der es sich insbesondere um gereinigtes Abwasser handelt.

Vorrichtungen dieser Art werden insbesondere bei Kläranlagen eingesetzt, denn das gereinigte Abwasser von Kläranlagen muss heute immer öfter vor der Einleitung in natürliche Gewässer desinfiziert werden. Zu diesem Zweck wird das durch die Kläranlage gereinigte Abwasser einer ultravioletten Strahlung (UV-Bestrahlung) ausgesetzt. Die dabei verwendeten UV-Module mit Quecksilber-Niederdruckstrahlern erzeugen eine UV-Strahlung im Wellenlängenbereich von etwa 200 nm bis 300 nm mit einem Maximum bei 253,7 nm.

Die UV-Module sind als UV-Tauchstrahler ausgebildet und umfassen jeweils einen Quecksilber-Niederdruckstrahler, welcher von einem für UV-Strahlung durchlässigen Hüllrohr umgeben ist. Entsprechende Vorrichtungen der soweit beschriebenen Art zur UV-Bestrahlung sind beispielsweise aus den Dokumenten EP 0687201, DE 3270676, US 4,757,205, US5,019,256, US 4,482,809, EP 0080780 und EP 0249450 bekannt.

Aus der US 5,418,370 ist eine gattungsgemäße UV-Bestrahlungsvorrichtung für Abwässer bekannt. Bei dieser Vorrichtung soll eine besonders wirksame Desinfektion von Abwasser dadurch erreicht werden, dass der Abstand zwischen der Strahlungsquelle, also der Lampe, und der zu behandelnden Flüssigkeit möglichst gering gehalten wird. Dementsprechend liegen die Hüllrohre eng an den Strahlern an. So wird zwar eine große UV-Intensität an der Oberfläche der Hüllrohre erreicht, das gesamte durch die desinfizierende Strahlung erreichte Volumen ist jedoch relativ klein.

Im Gegensatz zu einem sauberen unbeeinflussten Wasser besitzt das zu desinfizierende Abwasser eine stark verminderte UV-Transmission, die in der Regel im Bereich von 40% bis 60% pro 1 cm Schichtdicke liegt. Dies bedeutet, dass bereits in einer 1 cm dünnen Wasserschicht 40% - 60% der applizierten UV-Strahlung absorbiert werden (zum Vergleich: reines Trinkwasser hat eine Transmission im Bereich von etwa 90% bis 98%, die Absorptionsverluste betragen folglich nur 2% bis 10% pro cm Schichtdicke). Die schlechte UV-Transmission solcher Medien hat zur Folge, dass man nur relativ dünne Schichten des Abwassers rings um das Hüllrohr herum effektiv bestrahlen kann, weil die wirksame Eindringtiefe der UV-Strahlung so gering ist. Für weiter vom Hüllrohr entfernt liegende Schichten muss die Bestrahlungszeit lang sein, was eine niedrige Strömungsgeschwindigkeit bedingt. Die bekannten Vorrichtungen zur UV-Behandlung von Abwasser können in einer Zeiteinheit daher nur geringe Abwassermengen desinfizieren.

Es ist deshalb Aufgabe der vorliegenden Erfindung, eine verbesserte UV-Desinfektion von größeren Abwassermengen mit verminderter UV-Transmission zu ermöglichen.

Dies wird dadurch erreicht, dass der Abstand der UV-Module voneinander so gewählt ist, dass der Querschnitt des Bestrahlungsraumes, der sich für jedes UV-Modul ergibt, um nicht mehr als das zehnfache größer als der Querschnitt des UV-Moduls ist und dass der Innendurchmesser der Hüllrohre der UV-Module so bemessen ist, dass zwischen dem UV-Strahler und dem Hüllrohr ein Ringspalt von größer als 3 mm, insbesondere ein Ringspalt von mehr als 4 mm, gebildet ist.

Insbesondere sollen die Quecksilber-Niederdruckstrahler der UV-Module eine Bestrahlungsstärke oder Intensität von größer/gleich 60 mW/cm² auf der Hüllrohroberfläche des Hüllrohres im Bereich von 200 - 280 nm emittieren. Vorzugsweise ist der Querschnitt des Bestrahlungsraumes eines UV-Moduls um nicht mehr als das 7,5-fache größer als der Querschnitt des UV-Moduls selbst.

Der Begriff "Hochleistungs-Quecksilber-Niederdruckstrahler" bezieht sich auf Strahler, die eine elektrische Leistung von mehr als 150 Watt pro Meter Strahlerlänge aufweisen und/oder (im Neuzustand) eine Strahlungsleistung von mehr als 50W pro Meter Strahlerlänge im UV-C-Bereich abgeben. Der Begriff "Bestrahlungsraum", der sich für jedes UV-Modul ergibt, wird nachfolgend näher erläutert.

Im folgenden wird ein Ausführungsbeispiel der vorliegenden Erfindung anhand der Zeichnung beschrieben. Es zeigen:
- Fig. 1:: eine erfindungsgemäße UV-Vorrichtung in einer schematischen perspektivischen Darstellung; sowie
- Fig. 2:: eine elektrische Beschaltung zur Regelung der UV-Strahler.

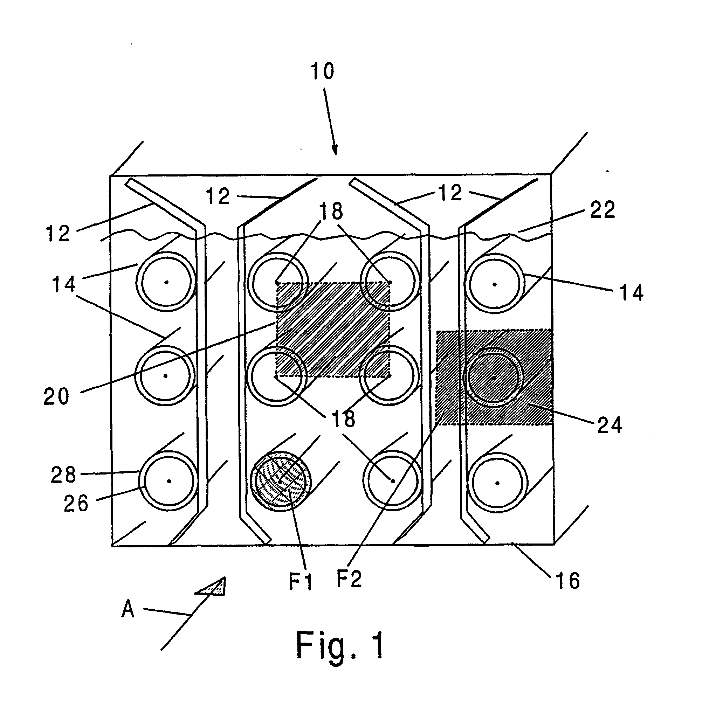

In der Figur 1 ist in einer schematischen perspektivischen Darstellung eine UV-Vorrichtung 10 mit Rahmen 12 gezeigt, welche UV-Module 14 tragen. Jedes UV-Modul 14 umfasst einen Hochleistungs-Quecksilber-Niederdruckstrahler 26, der in an sich bekannter Weise von einem Hüllrohr 17 umgeben ist.

Die Vorrichtung 10 ist in einem nicht näher dargestellten Gerinne angeordnet, in welchem das Abwasser in Richtung des Pfeiles A fließt, und welches einen Gerinneboden 16 besitzt. Die waagerecht verlaufenden UV-Module 14 sind in der Weise angeordnet, dass ihre Mittelpunkte 18 die Eckpunkte eines gedachten Quadrates 20 bilden. Sämtliche UV-Module 14 befinden sich in der Zeichnung im Abwasser unterhalb der Wasseroberfläche 22.

Jedem UV-Modul 14 ist ein Bestrahlungsraum 24 zugeordnet, der durch einen um ein UV-Modul 14 gedachten Raum gebildet ist, in dem sich als Mittelpunkt das UV-Modul 14 befindet. Der Bestrahlungsraum 24 ist im Querschnitt quadratisch ausgebildet und erstreckt sich von einem UV-Modul 14 ausgehend jeweils bis zur Hälfte des Abstandes zu den benachbarten UV-Modulen und entspricht in seiner Querschnittsfläche dem Querschnitt des gedachten Quadrates 20.

Bei der Erfindung ist der Abstand der UV-Module 14 derart gewählt, dass die Querschnittsfläche F2 des Bestrahlungsraumes jedes UV-Moduls 14 um nicht mehr als das 10-fache - insbesondere nicht mehr als das 7,5-fache - größer ist als die Querschnittsfläche F1 des betreffenden UV-Moduls 14. Es gilt somit der Zusammenhang F2 kleiner/gleich 10 x F1 (bzw. vorzugsweise F2 kleiner/gleich 7,5 x F1).

Die Hochleistungs-Quecksilber-Niederdruckstrahler 26 mit ihrer großen Strahlungsleistung bewirken auf der Hüllrohroberfläche eine hohe Bestrahlungsstärke von größer/gleich 60 mW/cm². Dabei kommen Hüllrohre 17 mit vergleichsweise großem Außendurchmesser von mindestens 3,0 cm zum Einsatz. Trotz der relativ großen Oberfläche des Hüllrohres wird wegen der erwähnten Hochleistungs-Quecksilber-Niederdruckstrahler gleichwohl auf der Oberfläche pro cm² eine erhöhte Leistung erreicht.

In Versuchen hat sich überraschend gezeigt, dass mit der Erfindung eine wesentlich höhere Strömungsgeschwindigkeit des Abwassers von mehr als 0,25 m/s möglich ist, und dass pro Zeiteinheit entscheidend größere Abwassermengen desinfiziert werden können, wodurch der Wirkungsgrad der erfindungsgemäßen Vorrichtung um ein Vielfaches verbessert wird. In zweckmäßiger Ausgestaltung der Erfindung besitzen die UV-Strahler 26 einen Außendurchmesser von etwa 22 mm bis 32 mm, wobei der Ringspalt zwischen den UV-Strahlern und dem umgebenden Hüllrohr mindestens 3 mm und vorzugsweise 4 bis 6 mm beträgt.

In weiterer zweckmäßiger Ausgestaltung der Erfindung werden zur Erzielung einer hohen Strahlungsleistung amalgamdotierte Hochleistungs-Quecksilber-Niederdruckstrahler verwendet. In zweckmäßiger Ausgestaltung der Erfindung werden diese Niederdruckstrahler zur Erzielung hoher Strahlungsleistungen bei hohen Wirkungsgraden mit elektronischen Vorschaltgeräten betrieben, wie sie beispielsweise durch das Dokument DE 196 37 906 A1 bekannt sind. Dabei können bis zu zwei Niederdruckstrahler mit einem gemeinsamen elektronischen Vorschaltgerät betrieben werden.

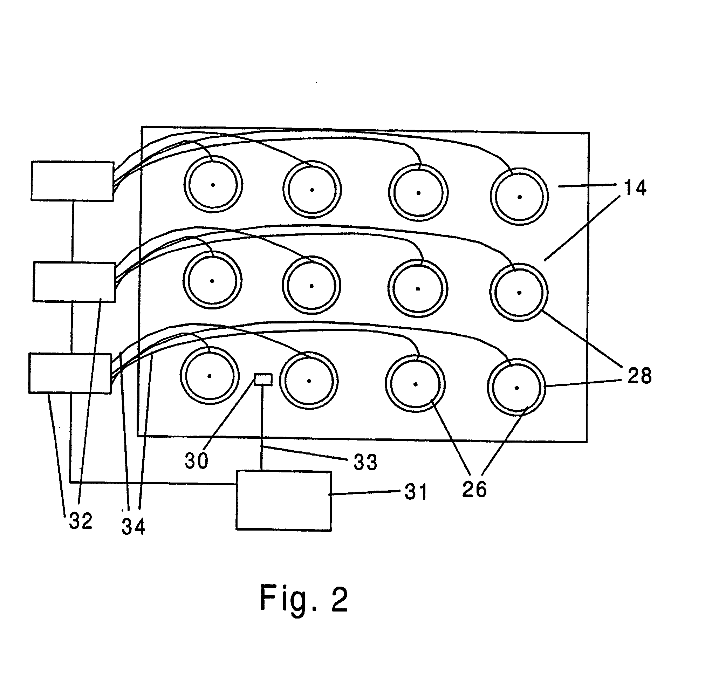

Hierzu zeigt die Figur 2 in einer schematischen Darstellung eine Anordnung von Strahlermodulen 14 entsprechend Fig. 1 mit einem Strahlungssensor 30, einer Steuerung 31 und elektronischen Vorschaltgeräten 32, die zur Ansteuerung der UV-Strahler 26 vorgesehen sind. Der Strahlungssensor 30 misst die in einem definierten Abstand von dem Hüllrohr 28 einfallende Strahlungsintensität in mW/cm² und übermittelt den Messwert über eine elektrische Leitung 33 an die Steuerung 31. Dort wird der Messwert mit der vorgesehenen Strahlungsintensität, die für einen effektiven Betrieb der Anlage erforderlich ist, verglichen. Die über die elektronischen Vorschaltgeräte 32 an die Strahler 26 abgegebene elektrische Leistung wird dann so geregelt, dass im wesentlichen nicht mehr und nicht weniger als dieser optimale Wert der Strahlungsintensität erreicht wird.

Dabei ergibt sich als weiterer Vorteil eine Regelbarkeit der Strahler, die je nach Transmission des Mediums eine geringere als die maximal mögliche Strahlungsleistung einstellbar macht.

Der Alterungsprozess von Hg-Niederdruckstrahlern im Betrieb bewirkt außerdem, dass die eingangs erwähnte Strahlungsleistung von beispielsweise 50W UV-C pro Meter Strahlerlänge absinkt, wobei die Leistungsaufnahme etwa gleich bleibt. Die Regelbarkeit der UV-Strahler ermöglicht deshalb erstmals eine Konfiguration, die auf einen sicheren Betrieb mit ausreichendem Wirkungsgrad am Ende der planmäßigen Standzeit ausgelegt ist, also z.B. mit 20W UV-C pro Meter Entladungslänge ausreichende Desinfektion gewährleistet. Diese Strahlungsleistung kann dann am Beginn der Nutzungsdauer mit der Regelung eingestellt werden. Hierzu wir die zugeführte elektrische Leistung von z.B. 200W auf 100W pro Meter Strahlerlänge reduziert. Mit zunehmender Alterung kann dann die Strahlungsleistung konstant gehalten werden, indem die zugeführte elektrische Leistung angehoben wird. Diese Regelung kann über UV-Sensoren 30 erfolgen, die die tatsächlich abgegebene Strahlungsleistung messen und über einen Regelkreis bedarfsgerecht anpassen.

Mit der vorliegenden Konfiguration von Strahlern und Hüllrohren ist eine solche Regelung erstmals möglich, da der Ringspalt zwischen dem Strahler und dem Hüllrohr mit mehr als 3,0 mm so groß dimensioniert ist, dass auch bei gegenüber der Maximalleistung abgesenkter Leistungsaufnahme der Strahler nicht unter seine minimal erforderliche Betriebstemperatur abkühlt.

## Patentansprüche

1. Vorrichtung (10) zur UV-Bestrahlung, insbesondere zur Desinfektion, von strömenden Flüssigkeiten in Form von gereinigtem Abwasser, wobei die Vorrichtung (10) in einer Bestrahlungskammer angeordnet ist und mindestens einen Halterahmen (12) mit einer Vielzahl von UV-Modulen (14) umfaßt, die parallel zueinander in Strömungsrichtung (A) des gereinigten Abwassers angeordnet sind, und wobei jedes UV-Modul (14) als Tauchstrahler ausgebildet und jeweils aus einem als Quecksilber-Niederdruckstrahler ausgebildeten UV-Strahler (26) gebildet ist, der von einem für UV-Strahlen durchlässigen Hüllrohr (28) umgeben ist, **dadurch gekennzeichnet, daß** jedem UV-Modul (14) ein Bestrahlungsraum (24) mit vieleckigem Querschnitt zugeordnet ist, dessen Mittelpunkt zugleich der Mittelpunkt (18) des UV-Strahlers (26) ist und der sich vom Mittelpunkt (18) ausgehend jeweils bis zur Hälfte des Abstandes zu den benachbarten UV-Modulen (14) erstreckt, wobei die einzelnen UV-Module (14) derart angeordnet sind, daß die Mittelpunkte (18) einer Anzahl benachbarter UV-Module (14) die Eckpunkte eines Vielecks (20) bilden, dessen Fläche der Summe der Querschnittsfläche (F1) eines UV-Moduls (14) und der Querschnittsfläche (F2) des Bestrahlungsraumes (24) eines UV-Moduls entspricht, daß der Abstand der UV-Module (14) voneinander so gewählt ist, daß die Querschnittsfläche (F2) des Bestrahlungsraumes (24) jedes UV-Moduls (14) um nicht mehr als das 10-fache größer ist als die Querschnittsfläche (F1) des UV-Moduls (14) selbst, und daß der Innendurchmesser der Hüllrohre (28) der UV-Module (14) so bemessen ist, daß zwischen dem UV-Strahler (26) und dem Hüllrohr (28) ein Ringspalt von größer als 3 mm, insbesondere ein Ringspalt von mehr als 4 mm, gebildet ist.

2. Vorrichtung nach Anspruch 1, **dadurch gekennzeichnet, daß** die Querschnittsfläche (F2) des Bestrahlungsraumes (24) jedes UV-Moduls (14) um nicht mehr als das 7,5-fache größer ist als die Querschnittsfläche (F1) des dem Bestrahlungsraum (24) zugeordneten UV-Moduls (14) ist.

3. Vorrichtung nach einem der vorhergehenden Ansprüche, **dadurch gekennzeichnet, daß** die UV-Module (14) jeweils einen Hochleistungs-UV-Strahler (26) enthalten, welchen eine Entladungslänge von mindestens 1,2 m besitzt und eine Strahlungsleistung von mehr als 50 Watt UV-C pro 1 m Entladungslänge erzeugt.

4. Vorrichtung nach einem der vorhergehenden Ansprüche, **dadurch gekennzeichnet, daß** die Strömungsgeschwindigkeit ces die Bestrahlungsraume (24) durchfließenden gereinigten Abwassers größer als 0,25 m pro Sekunde ist.

5. Vorrichtung nach einem der vorhergehenden Ansprüche, **dadurch gekennzeichnet, daß** die Bestrahlungsräume (24) bei geringen Mengen von dem anfallenden gereinigten Abwasser laminar mit parallel verlaufenden Strömungslinion durchflossen werden.

6. Vorrichtung nach einem der vorhergehenden Ansprüche, **dadurch gekennzeichnet, daß** der UV-Strahler (26) eines UV-Moduls (14) einen Außendurchmesser zwischen 22 mm und 32 mm und insbesondere einen Außendurchmesser von 30 mm besitzt.

7. Vorrichtung nach einem der vorhergehenden Ansprüche, **dadurch gekennzeichnet, daß** die UV-Strahler (26) mit einem regelbaren elektronischen Vorschaltgerät betrieben sind, mit welchem die elektrische Leistung der UV-Strahler (26) regelbar ist.

8. Vorrichtung nach Anspruch 8, **dadurch gekennzeichnet, daß** wenigstens zwei UV-Strahler (26) mit einem gemeinsamen elektronischen Vorschaltgerät betrieben sind.

9. Vorrichtung nach Anspruch 8 oder 9, **dadurch gekennzeichnet, daß** der Innendurchmesser der Hüllrohre (28) bei Betrieb der UV-Strahler (26) mit elektronischen Vorschaltgeräten sc bemessen ist, daß der Ringspalt zwischen dem UV-Strahler (26) und dem Hüllrohr (28) größer als 3,0 mm, vorzugsweise größer als 4,5 mm ist.

10. Vorrichtung nach einem der vornergehenden Ansprüche, **dadurch gekennzeichnet, daß** der Bestrahlungsraum als Viereck oder sechseck, insbesondere als Quadrat oder regelmäßiges Sechseck ausgebildet ist.

11. Vorrichtung nach einem der vorhergehenden Ansprüche, **dadurch gekennzeichnet, daß** die elektrische Leistung der UV-Strahler (26) so geregelt ist, daß eine über die Zeit konstante Strahlungsleistung im UV-Bereich erzeugt wird.

12. Vorrichtung nach einem der vorhergehenden Ansprüche, **dadurch gekennzeichnet, daß** die elektrische Leistung der UV-Strahler (26) in Abhängigkeit von der UV-Transmission der Flüssigkeit geregelt ist.

## Claims

1. Device (10) for UV irradiation, particularly for disinfection, of flowing liquids in the form of treated wastewater, in which the device (10) is arranged in an irradiation chamber and comprising at least one support frame (12) with a large number of UV modules (14) which are arranged parallel with each other in the direction of flow (A) of the treated waste water, and in which each UV module (14) is designed as a submersible irradiator and are each formed from a UV irradiator (26) designed as a mercury low pressure irradiator, which UV irradiator is surrounded by an envelope tube (28) permeable by UV rays, **characterised in that** an irradiation space (24) with a polygonal cross-section is assigned to each UV module (14), the centre of which irradiation space is at the same time the centre (18) of the UV irradiator (26), and which extends from the centre (18) along half the distance to the adjacent UV modules (14), in which the individual UV modules (14) are arranged so that the centres (18) of a number of adjacent UV modules (14) form the corners of a polygon (20) whose area is equal to the sum of the cross-sectional area (F1) of a UV module (14) and the cross-sectional area (F2) of the irradiation space (24) of a UV module, **in that** the distance between the UV modules (14) is chosen so that the cross-sectional area (F2) of the irradiation space (24) of each UV module (14) is no more than 10 times greater than the cross-sectional area (F1) of the UV module (14) itself, and **in that** the inside diameter of the envelope tube (28) of the UV modules (14) is dimensioned so that an annular gap greater than 3 mm, in particular an annular gap of over 4 mm, is formed between the UV irradiator (26) and the envelope tube (28).

2. Device according to claim 1, **characterised in that** the cross-sectional area (F2) of the irradiation space (24) of each UV module (14) is no more than 7.5 times greater than the cross-sectional area (F1) of the UV module (14) assigned to the irradiation space (24).

3. Device according to one of the preceding claims, **characterised in that** the UV modules (14) contain a high capacity UV irradiator (26) which has a discharge length of at least 1.2 m, and generates a radiation output of over 50 watts UV-C per 1 m of discharge length.

4. Device according to one of the preceding claims, **characterised in that** the flow rate of the treated waste water flowing through the irradiation spaces (24) is greater than 0.25 m per second.

5. Device according to one of the preceding claims, **characterised in that** where there are low quantities of the treated waste water present the flow through the irradiation spaces (24) is laminar with parallel flowlines.

6. Device according to one of the preceding claims, **characterised in that** the UV irradiator (26) of a UV module (14) has an outside diameter of between 22 mm and 32 mm, and in particular an outside diameter of 30 mm.

7. Device according to one of the preceding claims, **characterised in that** the UV irradiators (26) are operated with an adjustable electronic ballast with which the electrical output of the UV irradiators (26) can be set.

8. Device according to claim 8, **characterised in that** at least two UV irradiators (26) are operated with a common electronic ballast.

9. Device according to claim 8 or 9, **characterised in that** the inside diameter of the envelope tube (28), when the UV irradiators (26) are operated with electronic ballasts, is dimensioned so that the annular gap between the UV irradiator (26) and the envelope tube (28) is greater than 3.0 mm, preferably greater than 4.5 mm.

10. Device according to one of the preceding claims, **characterised in that** the irradiation space is designed as a quadrilateral or hexagon, and in particular as a square or regular hexagon.

11. Device according to one of the preceding claims, **characterised in that** the electrical output of the UV irradiators (26) is regulated so that a radiation output constant over time is generated within the UV range.

12. Device according to one of the preceding claims, **characterised in that** the electrical output of the UV irradiators (26) is regulated according to the UV transmission of the fluid.

## Revendications

1. Dispositif (10) pour irradier à l'aide d'ultraviolets, notamment pour désinfecter, des liquides en écoulement sous la forme d'eaux usées purifiées, dans lequel le dispositif (10) est disposé dans une chambre d'irradiation et comprend au moins un cadre de retenue (12) comportant une multiplicité de modules à ultraviolets (14), qui sont disposés parallèlement entre eux dans la direction d'écoulement (A) des eaux usées purifiées, et dans lequel chaque module à ultraviolets (14) est agencé sous la forme d'un émetteur plongeur et est formé respectivement par un émetteur d'ultraviolets (26) agencé sous la forme d'un émetteur à basse pression de mercure, et qui est entouré par un tube enveloppe (28) transparent pour les rayons ultraviolets, **caractérisé en ce qu'**à chaque module à ultraviolets (14) est associée une chambre d'irradiation (24) possédant une section transversale polygonale, dont le centre constitue simultanément le centre (18) de l'émetteur d'ultraviolets (26) et qui s'étend à partir du centre (18) respectivement sur la moitié de la distance allant jusqu'au module à ultraviolets (14) voisins, les différents modules à ultraviolets (14) étant disposés de sorte que les centres (16) d'un certain nombre de modules à ultraviolets (14) voisins forment les sommets d'un polygone (20), dont la surface correspond à la somme de la surface en coupe transversale (F1) d'un module à ultraviolets (14) et de la surface en coupe transversale (F2) de la chambre irradiation (24) d'un module à ultraviolets, que la distance réciproque des modules à ultraviolets (14) est choisie de telle sorte que la surface en coupe transversale (F2) de la chambre irradiation (24) de chaque module à ultraviolets (14) n'est pas supérieure de plus du décuple à la surface en coupe transversale (F1) du module à ultraviolets (14) lui-même et que le diamètre intérieur des tubes enveloppes (28) des modules à ultraviolets (14) dimensionné de telle sorte qu'une fente annulaire d'une taille supérieure à 3 mm et notamment une fente annulaire de plus de 4 mm est formée entre l'émetteur d'ultraviolets (26) et le tube enveloppe (28).

2. Dispositif selon la revendication 1, **caractérisé en ce que** la surface en coupe transversale (F2) de la chambre d'irradiation (24) de chaque module à ultraviolets (14) n'est pas supérieure d'un multiple supérieur à 7,5 fois, à la surface en coupe transversale (F1) du module à ultraviolets (14) associé à la chambre d'irradiation (24).

3. Dispositif selon l'une des revendications précédentes, **caractérisé en ce que** les modules à ultraviolets (14) contiennent respectivement un émetteur à ultraviolets de grande puissance (26), qui possède une longueur de décharge égale au moins à 1,2 m et produit une puissance de rayonnement supérieure à 50 watts de rayons ultraviolets UV-C pour 1 m de longueur de décharge.

4. Dispositif selon Tune des revendications précédentes, **caractérisé en ce que** la vitesse d'écoulement des eaux usées purifiées, qui traversent les chambres d'irradiation (24) est supérieure à 0,25 m par seconde.

5. Dispositif selon l'une des revendications précédentes, **caractérisé en ce que** les chambres d'irradiation (24) sont traversées de façon laminaire avec des lignes d'écoulement parallèles dans le cas de faibles quantités des eaux usées purifiées, qui se présentent.

6. Dispositif selon l'une des revendications précédentes, **caractérisé en ce que** l'émetteur d'ultraviolets (26) d'un module à ultraviolets (14) possède un diamètre extérieur compris entre 22 mm et 32 mm et notamment un diamètre extérieur égal à 30 mm.

7. Dispositif selon l'une des revendications précédentes, **caractérisé en ce que** les émetteurs d'ultraviolets (26) fonctionnent avec un ballast électronique réglable, au moyen duquel la puissance électrique des émetteurs d'ultraviolets (26) est réglable.

8. Dispositif selon la revendication 7, **caractérisé en ce qu'**au moins deux émetteurs d'ultraviolets (26) fonctionnent avec un ballast électronique commun.

9. Dispositif selon la revendication 8 ou 9, **caractérisé en ce que** le diamètre intérieur du tube enveloppe (28) est dimensionné dans le cas du fonctionnement des émetteurs d'ultraviolets (26) avec des ballasts électroniques, de telle sorte que la fente annulaire entre l'émetteur d'ultraviolets (26) et le tube enveloppe (28) est supérieure à 3,0 mm et de préférence est supérieure à 4,5 m.

10. Dispositif selon l'une des revendications précédentes, **caractérisé en ce que** la chambre d'irradiation est agencée sous la forme d'un quadrilatère ou d'un hexagone, notamment sous la forme d'un carré ou d'un hexagone régulier.

11. Dispositif selon l'une des revendications précédentes, **caractérisé en ce que** la puissance électrique des émetteurs d'ultraviolets (26) est réglée de manière à produire une puissance de rayonnement constante dans le temps, dans la plage des ultraviolets.

12. Dispositif selon l'une des revendications précédentes, **caractérisé en ce que** la puissance électrique des émetteurs d'ultraviolets (26) est réglée en fonction de la transmission des ultraviolets dans le liquide.
